# EUROPEAN PATENT APPLICATION

(11) **EP 1 388 704 A1**
(43) Date of publication of application: **11.02.2004**
(21) Application number: 02017490.0
(22) Date of filing: 05.08.2002
(51) Int. Cl.: F16M 11/10

(54) **Elevation angle adjustment mechanism of display**

(71) Applicant: ELITEGROUP COMPUTER SYSTEMS CO.,LTD., Taipei (TW)
(72) Inventor: Yang, Gordon, Taipei (TW); Ling, Alex, Taipei (TW)
(74) Representative: Viering, Jentschura & Partner

(57) **Abstract**

An elevation angle adjustment mechanism of display comprises a main body (10), a mount (20), and an angle adjustment device (30) connected in between. Static balance is achieved between a torque generated at the angle adjustment device (30) due to the weight of the main body (10) and a torque generated by friction and torsion of the angle adjustment device (30). The mount (20) connected with the angle adjustment device can thus be fixed at a certain angle within a certain range, thereby easily adjusting and arbitrarily positioning the elevation angle of the main body (10).

## Description

### Background of the Invention

### 1.Field of the invention

The present invention relates to an elevation angle adjustment mechanism of display, which is used for easy adjustment of the elevation angle of a display, and can arbitrarily fix the display at a certain angle to facilitate use.

### 2.Background of the invention

Displays are important communication interfaces between humans and computers. They can be used to express data processing results of computers so that users can understand operational states of computers. Therefore, how to let users arbitrarily adjust elevation angles of displays suitable for longtime watching becomes an important issue.

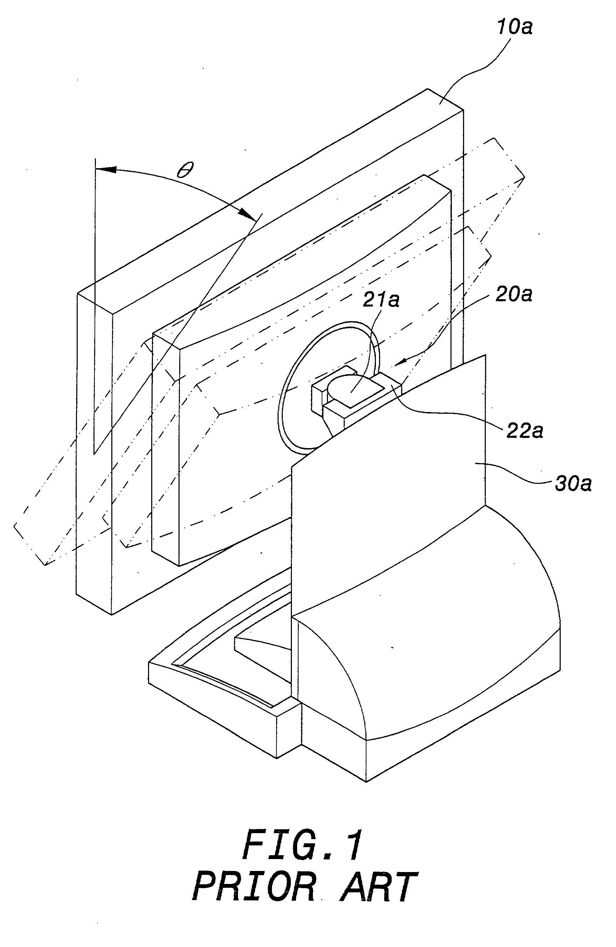

Generally speaking, other devices of a desktop computer are separated from a display. As shown in Fig. 1, a display 10a is connected with a base 30a through an elevation angle change device 20a, which is used to support the display 10a and adjust the elevation angle θ of the display 10a. The elevation angle change device 20a comprises a first support component 21a and a second support component 22a. The first support component 21a is connected with the display 10a. The second support component 22a is connected with the base 30a. The first support component 21a is used as the pivot, and is connected with the second support component 22a. The first support component 21a is used to adjust the elevation angle θ of the display 10a to meet the requirement of a user. However, because the elevation angle change device 20a exploits the friction between the first support component 21a and the second support component 22a to fix the angle of the display 10a, and the elevation angle change device 20a also supports the weight of the display 10a, the user needs to overcome the weight of the display 10a and the friction of the elevation angle change device 20a when adjusting the elevation angle of the display 10a. Adjustment of the elevation angle of the display 10a is thus difficult. Moreover, the adjusted elevation angle may change because of the weight of the display 10a so that it is difficult to adjust to the required elevation angle, resulting in inconvenience in use.

Accordingly, the present invention aims to propose an elevation angle adjustment mechanism of display to resolve the problems in the prior art.

### Summary of the invention

The primary object of the present invention is to provide an elevation angle adjustment mechanism of display to avoid the need of overcoming the weight of a display and the friction of the angle adjustment mechanism when adjusting the elevation angle of the display.

The secondary object of the present invention is to provide an elevation angle adjustment mechanism of display to avoid the situation that the adjusted elevation angle of a display may change because of the weight of the display.

Another object of the present invention is to provide an elevation angle adjustment mechanism of display, whereby the angle between a mount and a main body thereof can be easily adjusted single-handedly to achieve the object of arbitrarily positioning the elevation angle of the display at a certain angle.

To achieve the above objects, the present invention provides an elevation angle adjustment mechanism of display comprising a main body, an angle adjustment device, and a mount, which are connected in order. A twist portion of the angle adjustment device comprises a spring, a first fixing sheet, and a screw nut, and is used to provide a torque. A friction portion of the angle adjustment device comprises a friction plate, a baffle, a push gasket, and a skidproof gasket, and is used to provide a static friction force. The angle between the main body and the mount is adjusted to let static balance be achieved between a torque generated at the angle adjustment device due to the weight of the main body and a torque generated by the twist portion and the friction portion of the angle adjustment device. The mount can thus be fixed at a certain angle within a certain range, thereby adjusting the elevation angle of the main body and arbitrarily positioning the elevation angle of the main body to a certain angle.

The various objects and advantages of the present invention will be more readily understood from the following detailed description when read in conjunction with the appended drawing, in which:

### Brief description of the drawings:

Fig. 1 is a perspective view showing adjustment of the elevation angle of a display in the prior art;
Fig. 2 is a perspective view of an elevation angle adjustment mechanism of display of the present invention;
Fig. 3 is a side view of an elevation angle adjustment mechanism of display of the present invention;
Fig. 4 is an exploded perspective view of an angle adjustment device of the present invention;
Fig. 5 is a perspective assembly view of an angle adjustment device of the present invention;
Fig. 6 is an exploded perspective view of an elevation angle adjustment mechanism of display according to a first embodiment of the present invention;
Fig. 7 is an exploded perspective view of an elevation angle adjustment mechanism of display according to a second embodiment of the present invention;
Fig. 8 is a side view showing adjustment of the rear elevated angle of an elevation angle adjustment mechanism of display of the present invention; and
Fig. 9 is a side view showing adjustment of the front elevated angle of an elevation angle adjustment mechanism of display of the present invention.

### Detailed description of the preferred embodiments

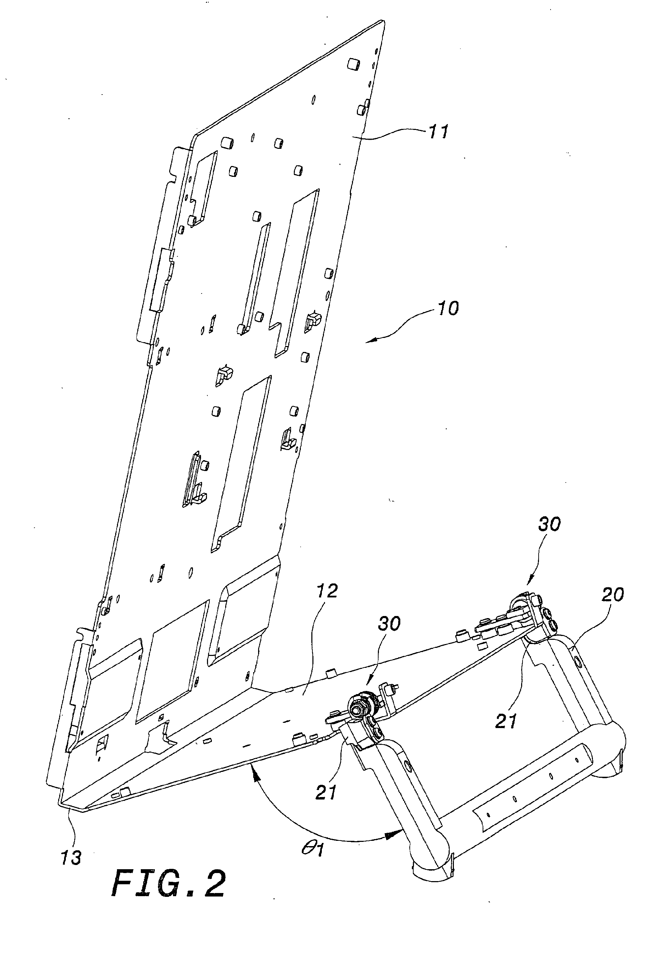

As shown in Fig. 2, an elevation angle adjustment mechanism of display of the present invention comprises a main body 10, a mount 20, and an angle adjustment device 30. The angle adjustment device 30 is disposed between the main body 10 and the mount 20. The angle between the main body 10 and the mount 20 is adjusted to let static balance be achieved between a torque generated at the angle adjustment device 30 due to the weight of the main body 10 and a torque generated by torque and friction of the angle adjustment device 30. The mount 20 can thus be fixed at a certain angle within a certain range, thereby adjusting and arbitrarily positioning the elevation angle of the main body 10.

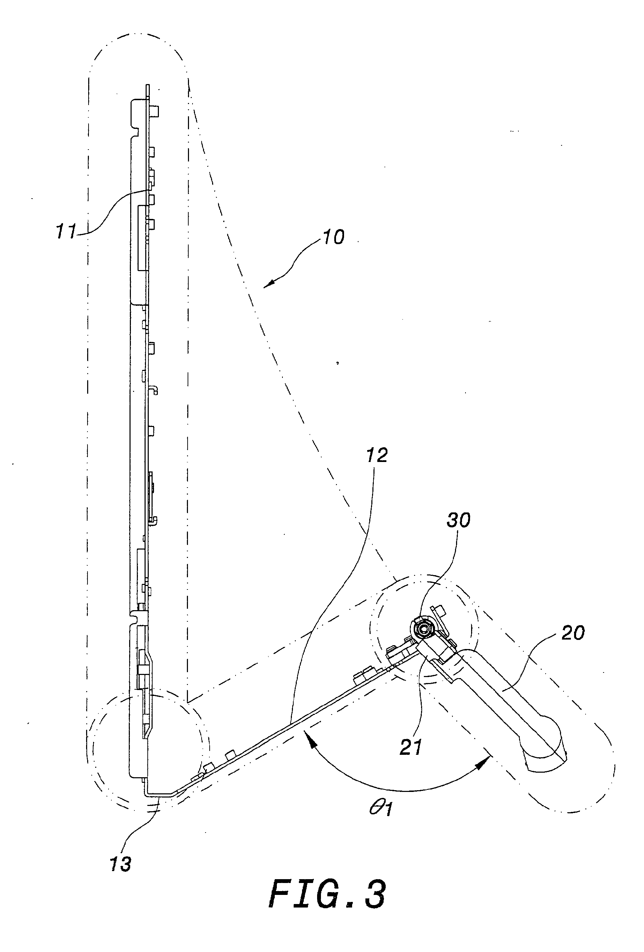

As shown in Figs. 2 and 3, the main body 10 can be a desktop computer with a display. The main body 10 comprises a front sideboard 11 and a rear sideboard 12. A support portion 13 is formed between the front sideboard 11 and the rear sideboard 12. The mount 20 is connected with the rear sideboard 12 through the angle adjustment device 30. The support portion 13 of the main body 10 and the mount 20 are used for support so that the main body 10 can be firmly placed at a platform (not shown). The weight of the main body 10 generates a torque to the angle adjustment device 30 with the support portion 13 as the fulcrum. The mount 20 can be U-shaped, and a connection portion 21 thereof is connected with the angle adjustment device 30.

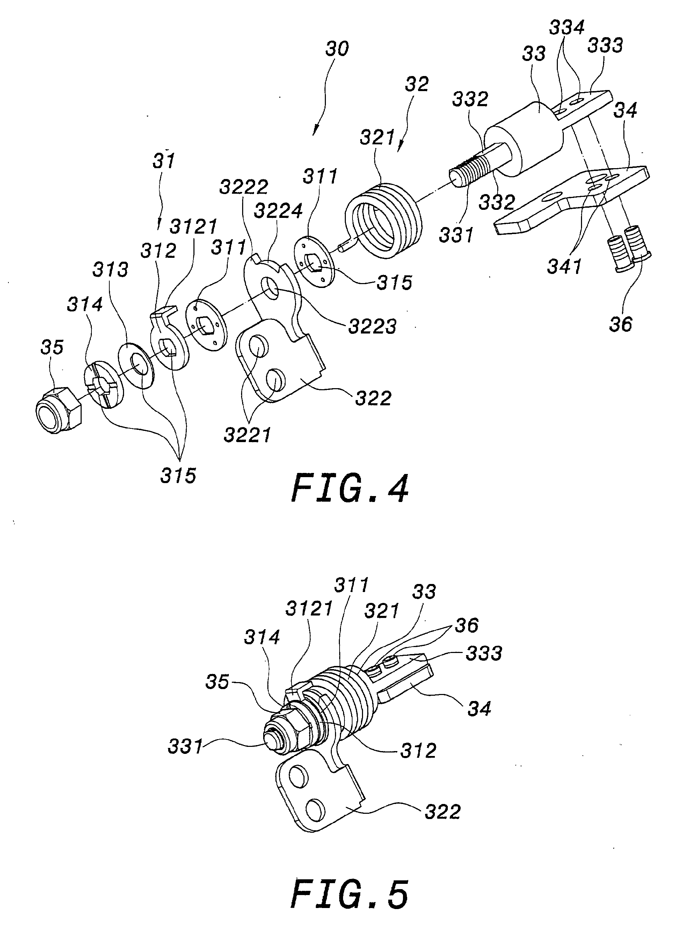

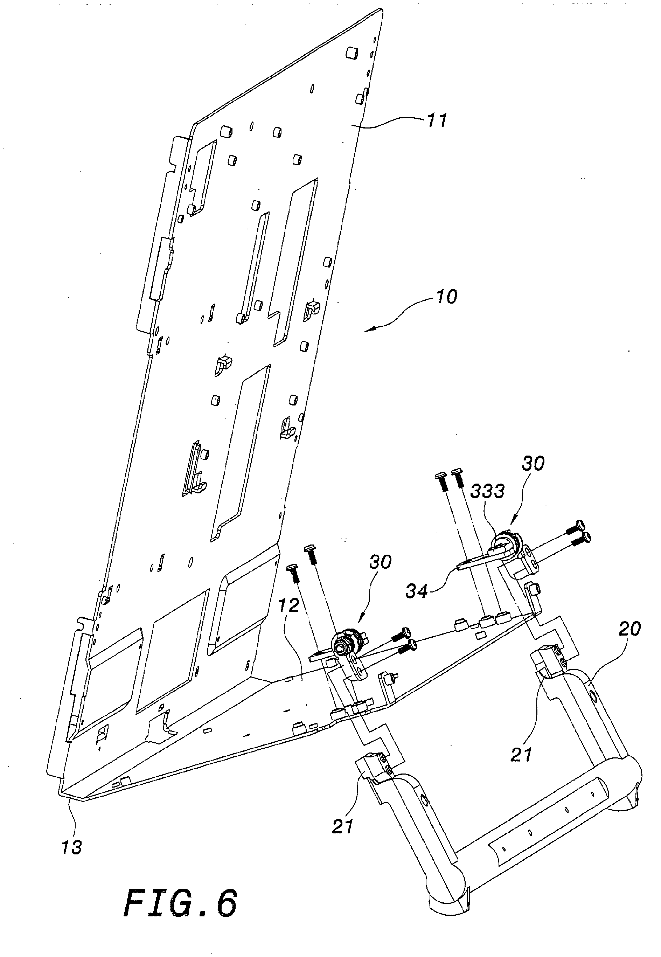

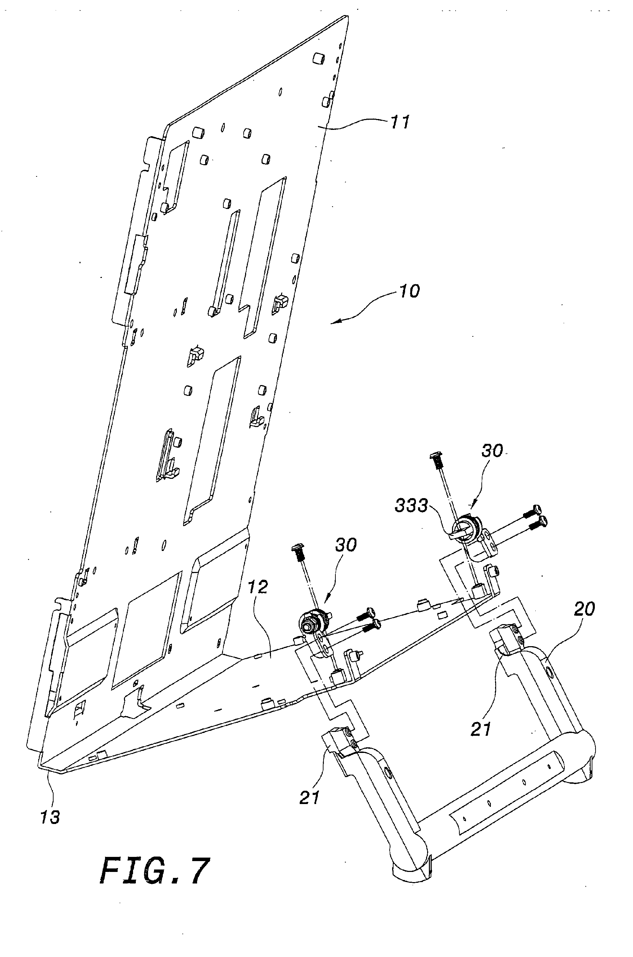

As shown in Figs. 4 to 7, the angle adjustment device 30 comprises a friction portion 31, a twist portion 32, a pivotal rod 33, and a first fixing sheet 34. The friction portion 31 comprises a friction board 311, a baffle 312, a push gasket 313, and a skidproof gasket 314. The twist portion 32 comprises a spring 321, and a second fixing sheet 322. A guide plate 3222 is folded at one side of the second fixing sheet 322. A pivotal hole 3223 and a locking portion 3224 are formed on the guide plate 3222. A first circular hole 3221 to be locked on the connection portion 21 of the mount 20 is formed on the second fixing sheet 322, as shown in Fig. 6. Besides, the spring 321 of the twist portion 32 can be a torsion spring. A small-diameter rod 331 axially protrudes from one end of the pivotal rod 33. Two planes 332 are formed on the small-diameter rod 331 to let the cross section of the small-diameter rod 331 correspond to a through hole 315 of the component like the friction portion 31. The small-diameter rod 331 of the pivotal rod 33 is slipped into the spring 321, the pivotal hole 3223 of the guide plate 3222, and the through hole 315 of the component like the friction portion 31. A projection portion 3121 disposed on the baffle 312 is embedded into the locking portion 3224 of the guide plate 3222 to transfer friction generated by the friction portion 31 to the second fixing sheet 322. A slab 333 is disposed at the other end of the pivotal rod 33. A plurality of second circular holes 334 corresponding to third circular holes 341 of the first fixing plate 34 are formed on the slab 333. The second circular holes 334 and the third circular holes 341 are locked with screws 36 to let the first fixing plate 34 be locked at the rear sideboard 12 of the main body 10, as shown in Fig. 6. The slab 333 of the pivotal rod 33 is directly locked at the rear sideboard 12 of the main body 10, as shown in Fig. 7. A torsion is applied to the spring 321 beforehand to let the spring 321 has a restoring force. Two arms of the spring 321 abut against the first fixing sheet 34 and the second fixing sheet 32, respectively. When the slab 333 of the pivotal rod 33 is directly locked with the main body 10, one arm of the spring 321 abuts against the slab 333.

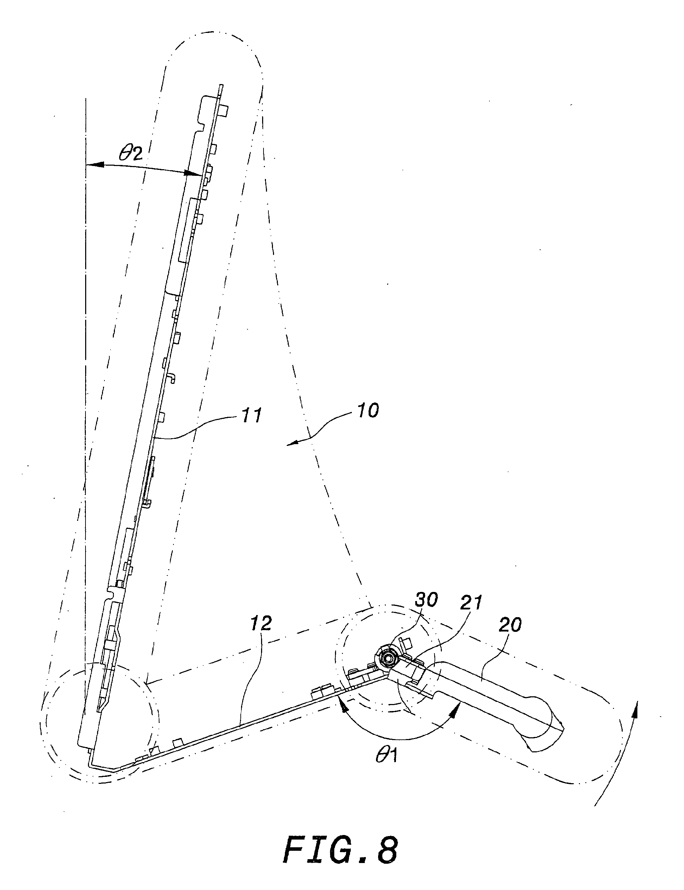

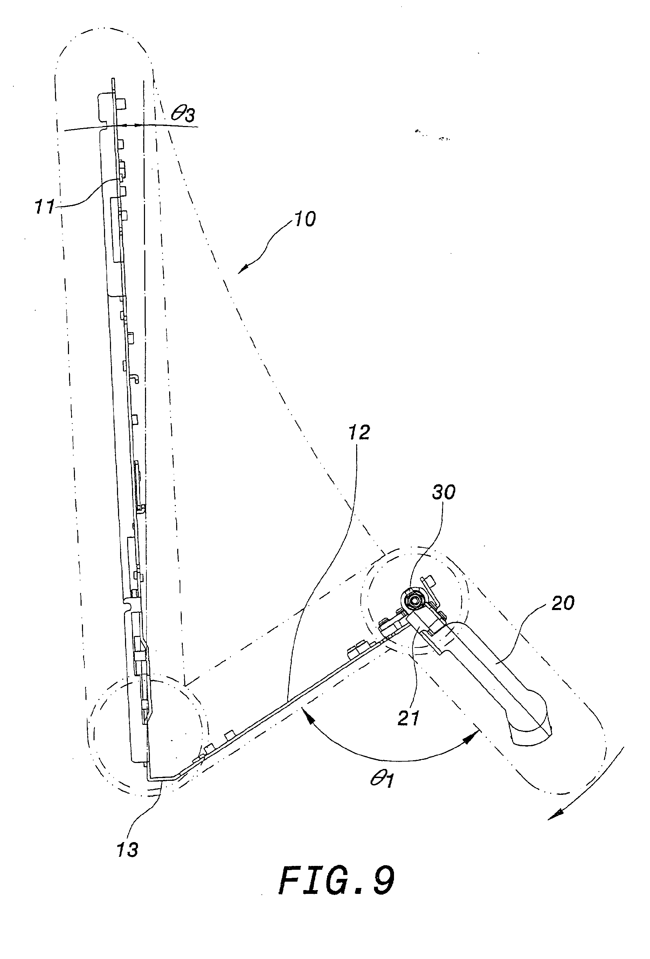

As shown in Figs. 8 and 9, when the angle adjustment device 30 is connected with the main body 10 and the mount 20, the support portion 13 and the mount 20 are used as the fulcrums, and static balance is achieved between a torque generated at the angle adjustment device 30 due to the weight of the main body 10 and a torque generated by the twist portion 32 and the friction portion 31 of the angle adjustment device 30. The main body 10 can thus be firmly placed at a platform (not shown), and the angle of the mount 20 can be easily adjusted. The included angle θ1 between the main body 10 and the mount 20 can be increased to let the front sideboard 11 of the main body 10 incline backwards. The backward inclination angle θ2 of the front sideboard 11 is 1~15 degrees. The included angle θ1 between the main body 10 and the mount 20 can also be decreased to let the front sideboard 11 of the main body 10 incline forwards. The forward inclination angle θ3 of the front sideboard 11 is 1~3 degrees. Therefore, the elevation angle of a display can be adjusted and arbitrarily fixed.

To sum up, the angle between the mount and the main body can be easily adjusted single-handedly through the elevation angle adjustment mechanism of display of the present invention so as to adjust and arbitrarily position the elevation angle of a display. Moreover, the angle adjustment device can be more easily assembled with the main body and the mount, hence facilitating use and manufacturing.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

## Claims

1. An elevation angle adjustment mechanism of display, comprising:
a main body comprising a front sideboard and a rear sideboard, which are integrally formed;
at least an angle adjustment device locked at said rear sideboard of said main body; and
a mount locked with said angle adjustment device, said mount being used to achieve static balance between a torque generated at said angle adjustment device due to the weight of said main body and a torque of said angle adjustment device so that said mount is arbitrarily fixed at a certain angle, thereby adjusting and arbitrarily positioning the elevation angle of said front sideboard of said main body.

2. The elevation angle adjustment mechanism of display as claimed in claim 1, wherein said front sideboard of said main body inclines backwards 1~15 degrees.

3. The elevation angle adjustment mechanism of display as claimed in claim 1, wherein said front sideboard of said main body inclines forwards 1~3 degrees.

4. The elevation angle adjustment mechanism of display as claimed in claim 1, wherein said mount is U-shaped.

5. The elevation angle adjustment mechanism of display as claimed in claim 1, wherein said angle adjustment device comprises:
a pivotal rod locked at said rear sideboard of said main body;
a twist portion slipped onto said pivotal rod and used to generate a torque onto said pivotal rod; and
a friction portion slipped onto said pivotal rod and used to generate a friction force onto said pivotal rod, said twist portion adjoining said friction portion.

6. The elevation angle adjustment mechanism of display as claimed in claim 5, wherein said twist portion comprises at least a spring and a second fixing sheet, which are slipped onto said pivotal rod in order, and said second fixing sheet is locked onto said mount.

7. The elevation angle adjustment mechanism of display as claimed in claim 6, wherein said spring is a torsion spring.

8. The elevation angle adjustment mechanism of display as claimed in claim 5 further comprising a first fixing sheet, which is locked between said rear sideboard of said main body and said pivotal rod.
